# EUROPÄISCHE PATENTSCHRIFT

(11) **EP 1 088 710 B1**
(45) Veröffentlichungstag und Bekanntmachung des Hinweises auf die Patenterteilung: **09.07.2003**
(21) Anmeldenummer: 00117670.0
(22) Anmeldetag: 17.08.2000
(51) Int. Cl.: B60R 21/20

(54) **Abdeckung mit Kern und Stegen für eine Kraftfahrzeuginsassen- Rückhalteeinrichtung**
Cover with core and fins for a vehicle passenger restraining system
Couvercle avec substrat et saillies pour système de retenue de passager d'un véhicule

(30) Priorität: 30.09.1999 DE 19946915
(43) Veröffentlichungstag der Anmeldung: 04.04.2001
(73) Patentinhaber: Bayerische Motoren Werke Aktiengesellschaft, 80809 München (DE)
(72) Erfinder: Stavermann, Joerg, 80331 München (DE)

(56) Entgegenhaltungen:
- EP-A- 0 826 564
- WO-A-92/17351
- FR-A- 2 721 878
- US-A- 5 108 128
- US-A- 5 393 088
- PATENT ABSTRACTS OF JAPAN vol. 1998, no. 09, 31. Juli 1998 (1998-07-31) & JP 10 100822 A (INOAC CORP), 21. April 1998 (1998-04-21)

## Beschreibung

Die Erfindung betrifft eine Rückhalteeinrichtung für einen Kraftfahrzeuginsassen gemäß dem Oberbegriff des Patentanspruches 1.

Eine derartige Rückhalteeinrichtung ist aus der FR-A-2 721 878 bekannt.

Es ist bereits bekannt, eine Anordnung zum Formen einer Öffnung zum Aufblasen eines Luftkissens so zu gestalten, daß kurz vor der Entfaltung des Luftkissens eine Außenschicht eines Armaturenbretts, die dieses ununterbrochen vollständig bedeckt, an der Stelle einer Umrisskontur einer Entfaltungstür mittels eines linearen, Energie erzeugenden Elements geschwächt wird, um eine Bewegung der Türplatte nach außen zu ermöglichen, damit das Luftkissen bei seiner Entfaltung von einem Aufbewahrungsort hinter dem Armaturenbrett die Türplatte öffnen und durch dieses hindurch treten kann.

Die EP 0 595 374 B1 beschreibt eine solche Anordnung, bei der eine dekorative Außenschicht eines Armaturenbretts aus Vinylmaterial linienförmig erhitzt wird, um eine Öffnung für das Luftkissen unter dessen Entfaltungsdruck freizugeben.

Diese Anordnung hat den Nachteil, daß das Energie erzeugende Element mindestens durch eine Auslöseeinrichtung angesteuert werden muß. Außerdem muß es in das Armaturenbrett eingebaut werden, was dessen Herstellung verteuert und die Reißlinien können nach Sonneneinstrahlung ungewollt sichtbar werden.

Deshalb ist es Aufgabe der Erfindung, eine Anordnung zum Formen einer Öffnung zum Aufblasen eines Luftkissens so zu gestalten, daß zum Öffnen einer Außenschicht eines Verkleidungsteils, die dieses ununterbrochen vollständig bedeckt, an der Stelle einer Umrisskontur einer Entfaltungstür ausschließlich die Entfaltungsenergie des Luftkissens verwendet werden kann.

Die Aufgabe wird mit den Merkmalen des Anspruchs 1 gelöst. Weitere Ausgestaltungen der Erfindung ergeben sich aus den Unteransprüchen.

Nach der Erfindung ist eine Rückhalteeinrichtung für einen Kraftfahrzeuginsasssen, mit einem aufblasbaren Gassack unter einer in einem Verkleidungsteil gehaltenen Abdeckung, die aus mindestens einem Kern und mindestens einer Polsterschicht besteht und die auf einer zu dem Kraftfahrzeuginsasssen hin gerichteten Seite des Verkleidungsteils einstückig ohne Trennstelle mit diesem verbunden ist und nach dem Auslösen der Rückhalteeinrichtung von dem Gassack zu einem Innenraum des Kraftfahrzeugs hin aufgestoßen und von mindestens einer Halteeinrichtung, insbesondere einem Scharnierband, gehalten wird, weil die Halteeinrichtung an einer karosseriefesten Befestigungsstelle am Kraftfahrzeug und an der Abdeckung angebracht ist, dadurch gekennzeichnet, daß an dem Kern, zumindest entlang einer Umrißlinie der Abdeckung, Stege vorgesehen sind, die in die Polsterschicht hineinragen und die diese nach dem Auslösen der Rückhalteeinrichtung, beim Aufstoßen der Abdeckung, aufgrund der Schubkraft des sich ausdehnenden Gassacks durchtrennen.

Das hat den Vorteil, daß zum Öffnen der Außenschicht des Verkleidungsteils, die dieses ununterbrochen vollständig bedeckt, an der Stelle einer Umrisskontur einer Entfaltungstür ausschließlich die Entfaltungsenergie des Luftkissens verwendet werden kann. Außerdem ist ein solches Verkleidungsteil einfach herstellbar, ohne Qualitätsbeeinflussung der Optik durch Sichtbarwerden von Aufreißlinien. Die Oberfläche des Verkleidungsteils ist gestaltungsfrei und die Größe der Öffnung für den Gassack kann auf ein Minimum reduziert werden, wodurch auch die kinetische Energie der Abdeckung bei einer Gassackauslösung vorteilhafterweise reduziert wird.

Bei vorteilhaften Ausführungen der Erfindung ist die Abdeckung entweder an einem Lenkrad angebracht, oder dient zum Verschließen einer Öffnung in einer Armaturentafel oder in einer Innenverkleidung einer Fahrzeugtür oder -seitenwand. Dabei kann die Polsterschicht mindestens aus einer zum Kern hin gerichteten Schaumschicht und aus einer zum Kraftfahrzeuginnenraum hin gerichteten Hautoder Folienschicht bestehten und sich einstückig ohne Trennstelle sowohl über die Abdeckung, als auch über mindestens einen Teilbereich des Verkleidungsteils erstrecken.

Eine bevorzugte Ausführung der Erfindung ist dadurch gekennzeichnet, daß der Kern, mindestens in der Nähe der Stege, zum Kraftfahrzeuginnenraum hin gerichtete Überwölbungen besitzt. Vorteilhafterweise wird dadurch verhindert, daß bei flächigem Druck von außen auf die Verkleidung ungewollt die Oberfläche beschädigt wird.

Eine weitere bevorzugte Ausführung der Erfindung ist dadurch gekennzeichnet, daß der aufblasbare Gassack Teil eines Gassackmoduls ist, das hinter der Abdeckung des Verkleidungsteils fahrzeugfest angebracht ist. Dadurch kann die Abdeckung bei äußerer Belastung in Richtung Gassackmodul nachgeben, womit eine Oberflächenbeschädigung und im Falle des Aufschlagens eines Körperteils eines Fahrzeuginsassen auch Verletzungen vermieden werden können.

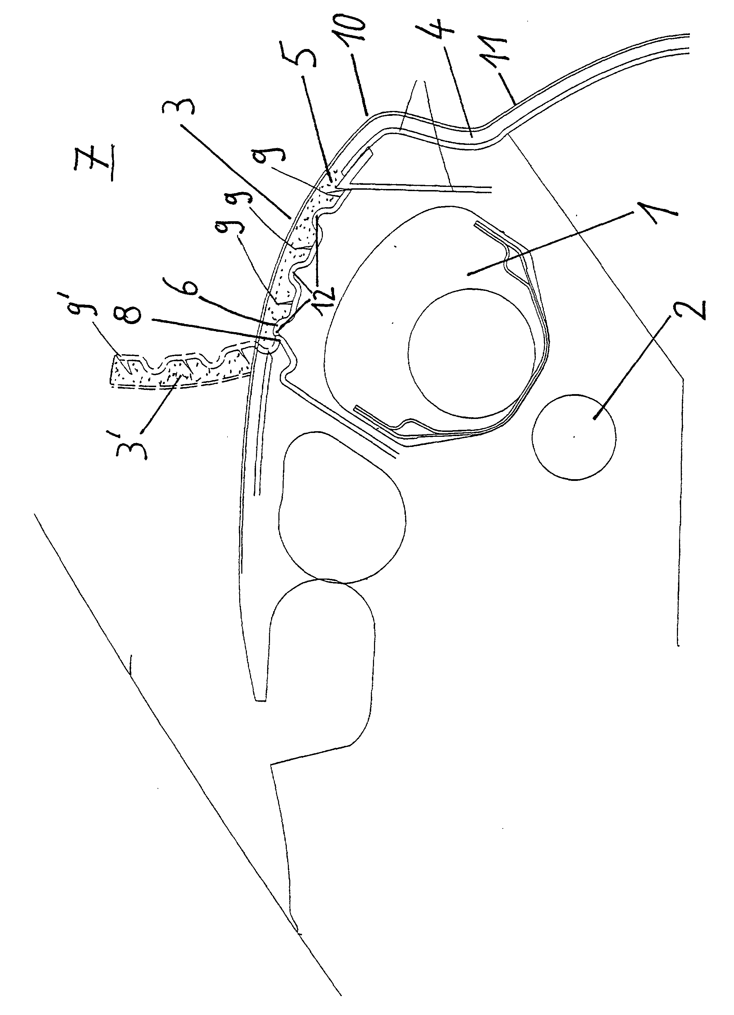

Ein bevorzugtes Ausführungsbeispiel der Erfindung beschreibt die nachfolgende Beschreibung mit der zugehörigen Zeichnung. Die einzige Figur zeigt einen Längsschnitt durch ein Kraftfahrzeug im Bereich der Armaturentafel und des Beifahrergassackmoduls.

Eine Rückhalteeinrichtung für einen Kraftfahrzeuginsasssen ist so ausgeführt, daß ein aufblasbarer Gassack in einem Gassackmodul 1 an einem Karosseriequerträger 2 unter einer Abdeckung 3 in einer Armaturentafel 4 befestigt ist. Die Abdeckung 3 besteht aus einem Kern 6 und einer Polsterschicht 10, die auf einer zu dem Kraftfahrzeuginsasssen hin gerichteten Seite der Armaturentafel 4 einstückig mit dieser ausgeführt ist. Nach dem Auslösen der Rückhalteeinrichtung wird die Abdeckung 3 von dem Gassack zu einem Innenraum 7 des Kraftfahrzeugs hin aufgestoßen und von einem Scharnierband 8, gehalten, weil das Scharnierband 8 an einer karosseriefesten Befestigungsstelle am Kraftfahrzeug und an der Abdekkung 3 angebracht ist. Die geöffnete Abdeckung ist mit 3' bezeichnet. An dem Kern 6 sind entlang einer Umrißlinie der Abdeckung 3 Stege 9,9' vorgesehen, die in die Polsterschicht 10 hineinragen und die diese nach dem Auslösen der Rückhalteeinrichtung, beim Aufstoßen der Abdeckung 3, aufgrund der Schubkraft des sich ausdehnenden Gassacks durchtrennen.

Die Polsterschicht 10 selbst besteht aus einer zum Gassackmodul 1 hin gerichteten Schaumschicht 5 und aus einer zum Kraftfahrzeuginnenraum hin gerichteten Hautoder Folienschicht 11. Dabei erstreckt sich die Polsterschicht 10 einstückig ohne Trennstelle sowohl über die Abdeckung 3, als auch über die Armaturentafel 4. Die Stege 9,9' zum Auftrennen der Polsterschicht 10 sind im Bereich der gewünschten Aufreißlinie an den Kern 6 aus Kunststoff angespritzt.

Der Kern 6 besitzt in der Nähe der Stege zum Kraftfahrzeuginnenraum hin gerichtete Überwölbungen 12. Diese verhindern ein Beschädigen der Polsterschicht 10 bei Druck von außen auf die Abdeckung 3. Zusätzlich kann die Abdeckung 3 zum Gassackmodul 1 hin nachgeben.

## Patentansprüche

1. Rückhalteeinrichtung für einen Kraftfahrzeuginsassen, mit einem aufblasbaren Gassack unter einer in einem Verkleidungsteil gehaltenen Abdeckung (3,3'), die aus mindestens einem Kern (6) und mindestens einer Polsterschicht (10) besteht und die auf einer zu dem Kraftfahrzeuginsassen hin gerichteten Seite des Verkleidungsteils einstückig ohne Trennstelle mit diesem verbunden ist und nach dem Auslösen der Rückhalteeinrichtung von dem Gassack zu einem Innenraum (7) des Kraftfahrzeugs hin aufgestoßen und von mindestens einer Halteeinrichtung, insbesondere einem Scharnierband (8), gehalten wird, weil die Halteeinrichtung an einer karosseriefesten Befestigungsstelle am Kraftfahrzeug und an der Abdeckung (3,3') angebracht ist, wobei an dem Kern (6), zumindest entlang einer Umrißlinie der Abdeckung (3,3'), Stege (9,9') vorgesehen sind, die in die Polsterschicht (10) hineinragen und die diese nach dem Auslösen der Rückhalteeinrichtung, beim Aufstoßen der Abdeckung (3,3'), aufgrund der Schubkraft des sich ausdehnenden Gassacks durchtrennen, **dadurch gekennzeichnet, dass** der Kern (6) mindestens in der Nähe der Stege (9, 9') zum Kraftfahrzeuginnenraum (7) hin gerichtete Überwölbungen (12) aufweist, wodurch bei flächigem Druck vom Kraftfahrzeuginnenraum her auf die Abdeckung (3, 3') eine unbeabsichtigte Beschädigung der Oberfläche der Abdeckung verhindert wird.

2. Rückhalteeinrichtung nach Anspruch 1, **dadurch gekennzeichnet, daß** die Abdeckung (3,3') an einem Lenkrad angebracht ist.

3. Rückhalteeinrichtung nach Anspruch 1, **dadurch gekennzeichnet, daß** die Abdeckung (3,3') zum Verschließen einer Öffnung in einer Armaturentafel (4) angebracht ist.

4. Rückhalteeinrichtung nach Anspruch 1, **dadurch gekennzeichnet, daß** die Abdeckung (3,3') zum Verschließen einer Öffnung in einer Innenverkleidung einer Fahrzeugtür oder -seitenwand angebracht ist.

5. Rückhalteeinrichtung nach einem der Ansprüche 1 bis 4, **dadurch gekennzeichnet, daß** die Polsterschicht (10) mindestens aus einer zum Kern (6) hin gerichteten Schaumschicht (5) und aus einer zum Kraftfahrzeuginnenraum (7) hin gerichteten Haut- oder Folienschicht (11) besteht.

6. Rückhalteeinrichtung nach einem der Ansprüche 1 bis 5, **dadurch gekennzeichnet, daß** sich die Polsterschicht (10) oder die Haut- oder Folienschicht (11) einstückig ohne Trennstelle sowohl über die Abdeckung (3) als auch über mindestens einen Teilbereich des Verkleidungsteils erstreckt.

7. Rückhalteeinrichtung nach einem der Ansprüche 1 bis 6, **dadurch gekennzeichnet, daß** der aufblasbare Gassack Teil eines Gassackmoduls (1) ist, das hinter der Abdeckung (3,3') des Verkleidungsteils fahrzeugfest angebracht ist.

## Claims

1. A vehicle occupant retaining device comprising an inflatable airbag under a cover (3, 3') held in a moulding part, the device comprising at least one core (6) and at least one padding layer (10) and being connected integrally without a break to the moulding part on the side thereof facing the vehicle occupants and being ejected into the vehicle interior (7) after the retaining device has been released by the airbag and being held by at least one holding means, especially a joint frame (8), because the holding means is attached to the cover (3, 3') and to the vehicle at a fixed place on the body, wherein webs (9, 9') are provided on the core (6), at least along a contour line of the cover (3, 3'), and project into the padding layer (10) and cut through it after release of the retaining device when the cover (3, 3') is pushed open, owing to the shearing force of the expanding airbag, **characterised in that** the core (6), at least near the webs (9, 9'), has bulges (12) facing the vehicle interior (7), thus preventing accidental damage to the surface of the cover (3, 3') when under pressure from the vehicle interior.

2. A retaining device according to claim 1, **characterised in that** the cover (3,3') is mounted on a steering wheel.

3. A retaining device according to claim 1, **characterised in that** the cover (3, 3') is adapted to close an opening in a dashboard (4).

4. A retaining device according to claim 1, **characterised in that** the cover (3, 3') is adapted to close an opening in an inner moulding of a vehicle door or side wall.

5. A retaining device according to any of claims 1 to 4, **characterised in that** the padding layer (10) comprises at least one foam layer (5) facing the core (6) and a skin or foil layer (11) facing the vehicle interior (7).

6. A retaining device according to any of claims 1 to 5, **characterised in that** the padding layer (10) or the skin or foil layer (11) extends continuously without a break over the cover (3) and at least partly over the moulding part.

7. A retaining device according to any of claims 1 to 6, **characterised in that** the inflatable airbag is a part of an airbag module (1) fastened to the vehicle behind the cover (3, 3') of the moulding part.

## Revendications

1. Dispositif de retenue d'un occupant d'un véhicule automobile dans lequel :
- un sac à gaz, gonflable est disposé sous un couvercle (3, 3') maintenu par une partie d'habillage, composé d'au moins un noyau (6) et d'au moins une couche de rembourrage (10) relié monobloc et sans points de séparation à la face interne de la partie d'habillage
- après déclenchement du dispositif de retenue, le couvercle est poussé par le sac à gaz vers l'habitacle (7) de l'automobile et retenu par au moins un dispositif de maintien en particulier une bande formant charnière (8), fixée à une partie du véhicule solidaire de la carrosserie et au couvercle (3, 3'),
- le noyau (6), au moins le long d'une ligne de déchirure du couvercle (3, 3') porte des nervures (9, 9') pénétrant dans la couche de rembourrage (10) qu'il sépare quand, après déclenchement du dispositif de retenue, le couvercle (3, 3') est poussé par la force qu'exerce le sac à gaz qui se déploie,
**caractérisé en ce que**
le noyau (6) présente, au moins à proximité des nervures (9, 9') des parties (12) bombées en direction de l'habitacle du véhicule (7) et qui, quand une pression est exercée à plat sur le couvercle (3, 3') de l'habitacle du véhicule, empêchent une détérioration de la surface du couvercle.

2. Dispositif de retenue selon la revendication 1,
**caractérisé en ce que**
le couvercle (3, 3') est monté sur un volant de direction.

3. Dispositif de retenue selon la revendication 1,
**caractérisé en ce que**
le couvercle (3, 3') est disposé de manière à obturer une ouverture dans le tableau de bord (4).

4. Dispositif de retenue selon la revendication 1,
**caractérisé en ce que**
le couvercle (3, 3') est disposé de manière à obturer une ouverture dans le revêtement interne d'une porte ou d'une paroi latérale d'un véhicule.

5. Dispositif de retenue selon l'une des revendications 1 à 4,
**caractérisé en ce que**
la couche de rembourrage (10) est composée d'une couche de mousse (5) du côté du noyau (6) et d'une couche pelliculaire (11) formant une peau du côté de l'habitacle (7).

6. Dispositif de retenue selon l'une des revendications 1 à 5,
**caractérisé en ce que**
la couche de rembourrage (10) ou la couche pelliculaire (11) formant une peau est monobloc et sans points de séparation à la fois sur le couvercle (3) et sur au moins une zone de la partie d'habillage.

7. Dispositif de retenue selon l'une des revendications 1 à 6,
**caractérisé en ce que**
le sac à gaz gonflable est une partie d'un module de sac à gaz (1) monté solidaire du véhicule derrière le couvercle (3, 3') de la partie d'habillage.
